# EUROPEAN PATENT SPECIFICATION

(11) **EP 3 936 403 B1**
(45) Date of publication and mention of the grant of the patent: **17.09.2025**
(21) Application number: 20782421.0
(22) Date of filing: 06.03.2020
(51) Int. Cl.: B60W 50/08, B60W 30/09, G08G 1/16, B60W 30/095, B60W 60/00, B60W 10/06, B60W 10/188, B60W 10/20, B60W 30/14, B60W 50/00

(54) **TRAVEL CONTROL SYSTEM FOR VEHICLE**
FAHRSTEUERUNGSSYSTEM FÜR FAHRZEUG
SYSTÈME DE COMMANDE DE DÉPLACEMENT POUR VÉHICULE

(30) Priority: 29.03.2019 JP 2019068435
(43) Date of publication of application: 12.01.2022
(73) Proprietor: MAZDA MOTOR CORPORATION, Hiroshima 730-8670 (JP)
(72) Inventor: SAKASHITA, Shinsuke, Aki-gun, Hiroshima 730-8670 (JP); HORIGOME, Daisuke, Aki-gun, Hiroshima 730-8670 (JP); ISHIBASHI, Masato, Aki-gun, Hiroshima 730-8670 (JP); HOJIN, Eiichi, Aki-gun, Hiroshima 730-8670 (JP)
(74) Representative: Behr, Wolfgang
(86) International application number: PCT/JP2020/009818
(87) International publication number: WO 2020/203058

(56) References cited:
- EP-A1- 2 025 577
- EP-A1- 3 045 369
- JP-A- 2005 178 627
- JP-A- 2013 129 328
- JP-A- 2017 013 644
- JP-A- 2018 090 218
- JP-A- 2018 176 879

## Description

### TECHNICAL FIELD

The present disclosure belongs to a technical field related to a motor vehicle cruise control system.

### BACKGROUND ART

There has been a known control system which controls a plurality of on-board units for traveling, which are mounted in a motor vehicle.

For example, Patent Document 1 discloses, as a vehicle cruise control system, a control system including unit controllers respectively controlling the on-board units, a domain controller controlling the unit controllers as a whole, and an integrated controller controlling the domain controllers as a whole. The control system is divided into a plurality of domains respectively corresponding to the functions of the on-board units in advance. Each of the domains is stratified into a group of the unit controllers and the domain controller. The integrated controller dominates the domain controllers.

In Patent Document 1, the unit controllers each calculate a controlled variable of an associated one of the on-board units, and each output a control signal for achieving the controlled variable to the associated on-board unit.

### CITATION LIST

### PATENT DOCUMENT

Patent Document 1: Japanese Unexamined Patent Publication No. 2017-61278

### [Non-Patent Document]

Non-Patent Document 1: Society of Automotive Engineers of Japan, Inc., "Taxonomy and Definitions for Terms Related to Driving Automation Systems for On-road Motor Vehicles," February 1, 2018, p.19
Document EP 3 045 369 A1 shows a system including an acquisition unit that acquires an operation amount or a duration count, and a switching unit that switches a driving state. The switching unit switches the driving state to the cooperative driving state when the operation amount is equal to or greater than an intervention threshold and less than a start threshold or the duration count is equal to or greater than a first threshold and less than a second threshold during the autonomous driving state, switches the driving state to the autonomous driving state when the operation amount is less than the intervention threshold or the duration count is less than the first threshold during the cooperative driving state, and switches the driving state to the manual driving state when the operation amount is equal to or greater than the start threshold or the duration count is equal to or greater than the second threshold.
Document EP 2 025 577 A1 a driving assist system that assists steering such that a vehicle travels along a set target course. A steering torque sensor detects a steering torque that serves as a steering operation input value generated by a driver. If the steering torque value is equal to or greater than a preset reference value and a direction corresponding to the steering torque is a direction away from another vehicle present ahead in an adjacent lane, then an ECU corrects the target course to a course that moves away from the other vehicle.

### SUMMARY OF THE INVENTION

### TECHNICAL PROBLEM

In recent years, development of driving automation systems for motor vehicles has been promoted nationally. The driving automation system has driver assistance and driving automation functions. The driving automation function is further classified into levels of "partial driving automation," "conditional driving automation," "high driving automation," and "full driving automation" (Non-patent Document 1).

In this case, if driving of a motor vehicle is to be automated, the level of automation may be fixed at any one of the foregoing levels. Alternatively, the level of automation may be changed based on an environmental change inside and outside the motor vehicle, a change in the condition of the motor vehicle, driver's needs, and other elements, i.e., in response to an associated driving situation. Then, for example, while the driver is driving the motor vehicle with "driver assistance," the driving may be changed to automated driving, such as "partial driving automation" or "conditional driving automation." In such a case, if the driving automation level for the motor vehicle is changed at a time unexpected by the driver, the driver may feel uncomfortable.

Further, depending on the driving situation, the driver is likely to want to reflect his/her intention in driving while autonomous driving is performed. For example, during autonomous driving, the driver is likely to want to slightly reduce the speed of the motor vehicle to see the scenery or to check ambient conditions, or is likely to unexpectedly want to drop by a facility that has come into sight or any other place. For example, at the driving automation level 3, the driver is highly likely to be seated so as to be able to drive the motor vehicle to address a situation where autonomous driving is difficult to continue. If the driver's needs described above arise, the driver is likely to try to operate the steering wheel, brake, or any other component. If, in such a case, a driver's operation is not reflected in a motion of the motor vehicle, this situation is inconvenient for the driver.

The present disclosure was made in view of the problems. It is an object of the present invention to provide a motor vehicle cruise control system that achieves control reflecting a driver's intention without impairing the driver's comfort even if the motor vehicle intervenes in driving (e.g., if driver assistance or driving automation is provided).

### SOLUTION TO THE PROBLEMS

To solve the foregoing problem, the present invention is directed to a motor vehicle cruise control system for controlling traveling of a motor vehicle. The system includes: an arithmetic unit configured to generate a route that avoids an obstacle on a road, based on an output from a vehicle exterior information acquisition device, determine a target motion of the motor vehicle during traveling of the motor vehicle along the route, and calculate a target physical amount to be output from a traveling device for achieving the target motion, the vehicle exterior information acquisition device being configured to acquire information on an environment outside the motor vehicle; and a device controller configured to generate an actuation control signal for controlling an actuation of the traveling device mounted in the motor vehicle, based on the target physical amount obtained by the arithmetic unit, and output the actuation control signal to the traveling device. Driving operation information on an operation performed by a driver is input to both the arithmetic unit and the device controller in parallel. The arithmetic unit is configured to reflect the driving operation information in a process of determining the target motion. The device controller is configured to reflect the driving operation information in the control of the actuation of the traveling device.

Note that "traveling devices" as used herein indicates devices such as actuators and sensors to be controlled while the motor vehicle is travelling.

According to this configuration, the driving operation information on the operation performed by the driver is input to both the arithmetic unit and the device controller in parallel. Thus, in the arithmetic unit, the driving operation information is reflected in the calculation of the target physical momentum. This can prevent the driver from feeling uncomfortable about the timing and degree of driver assistance intervention. Furthermore, the device controller is configured to reflect the driving operation information in the control of the actuation of the traveling device. This allows the output of the arithmetic unit to be reviewed, and allows switching to be made from autonomous driving to manual driving.

In the motor vehicle cruise control system, the device controller preferably generates a manual driving signal for controlling the actuation of the traveling device, based on the driving operation information on the operation performed by the driver, and outputs the manual driving signal, instead of the actuation control signal, to the traveling device if a predetermined condition determined in advance is satisfied.

According to this configuration, the motor vehicle cruise control system configured to enable autonomous driving can reliably control driving in accordance with the driver's driving operation. In other words, the motor vehicle cruise control system configured to enable autonomous driving can function to disable autonomous driving.

In the motor vehicle cruise control system of the present invention, the device controller generates manual driving information for controlling the actuation of the traveling device, based on the driving operation information on the operation performed by the driver, and corrects the actuation control signal based on the driving operation information if a behavior of the traveling device based on the actuation control signal deviates from a motion based on the manual driving information by an amount greater than or equal to a predetermined reference.

According to this configuration, for example, if the target physical momentum which is calculated by the arithmetic unit and which is produced on the traveling device deviates from a motion resulting from driving control based on the driving operation information on the driver' s operation by an amount greater than or equal to the predetermined reference, correcting the actuation control signal based on the driving operation information can provide control that reflects the driver's intention without impairing the driver's comfort.

### ADVANTAGES OF THE INVENTION

As can be seen from the foregoing description, according to the present invention, a motor vehicle cruise control system can achieve control that reflects a driver's intention without impairing the driver's comfort even if the motor vehicle intervenes in driving (e.g., even if driver assistance or driving automation is provided).

### BRIEF DESCRIPTION OF THE DRAWINGS

FIG. 1 schematically shows a configuration of a vehicle which is controlled by a vehicle cruise control system according to an exemplary embodiment.
FIG. 2 is a schematic view illustrating a configuration of an engine.
FIG. 3 is a schematic view showing a vehicle equipped with an arithmetic unit.
FIG. 4 is a block diagram showing a control system of a motor vehicle according to a first embodiment.
FIG. 5 is a block diagram showing the relationship between abnormality detectors and device controllers.
FIG. 6 shows an example of a route along which the vehicle travels.
FIG. 7 is a block diagram showing a control system of a motor vehicle according to a second embodiment.

### DESCRIPTION OF EMBODIMENTS

An exemplary embodiment will now be described in detail with reference to the drawings. Note that "traveling devices," which will be described below in the present embodiment, indicate devices such as actuators and sensors to be controlled while a vehicle 1 is traveling. Although described in detail below, examples of the "traveling devices" include devices related to traveling of the vehicle, such as a combustion injection valve, a spark plug, and a brake actuator.

### (First Embodiment)

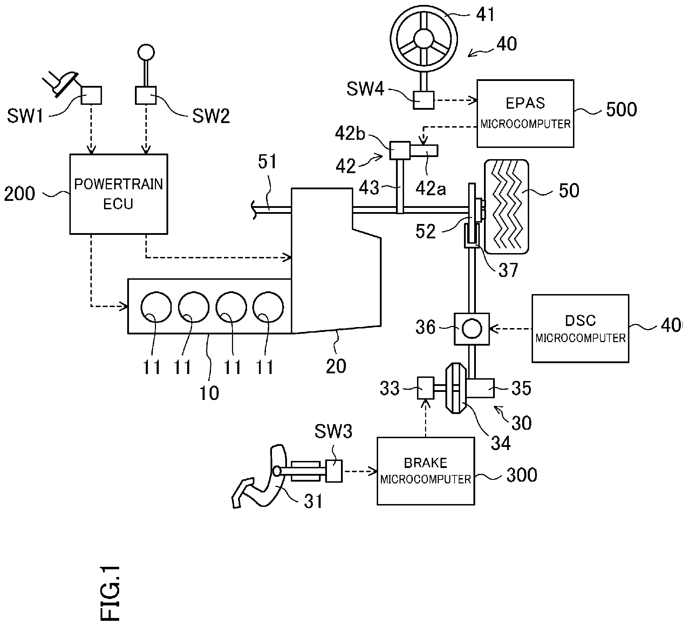

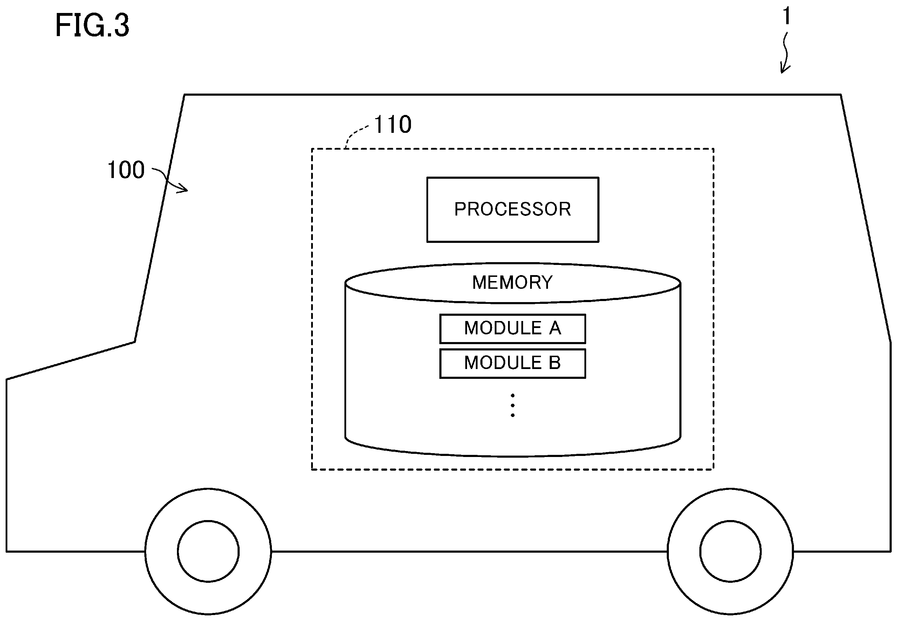

FIG. 1 schematically shows a configuration of a vehicle 1 (see FIG. 3) which is controlled by a cruise control system according to the present embodiment. The vehicle 1 is a motor vehicle that allows manual driving in which the vehicle 1 runs in accordance with an operation of an accelerator and any other component by a driver, assist driving in which the vehicle 1 runs while assisting the operation by the driver, and autonomous driving in which the vehicle 1 runs without the operation by the driver.

The vehicle 1 includes an engine 10 as a drive source having a plurality of (four in the present embodiment) cylinders 11, a transmission 20 coupled to the engine 10, a brake device 30 that brakes rotation of front wheels 50 serving as driving wheels, and a steering device 40 that steers the front wheels 50 serving as steered wheels.

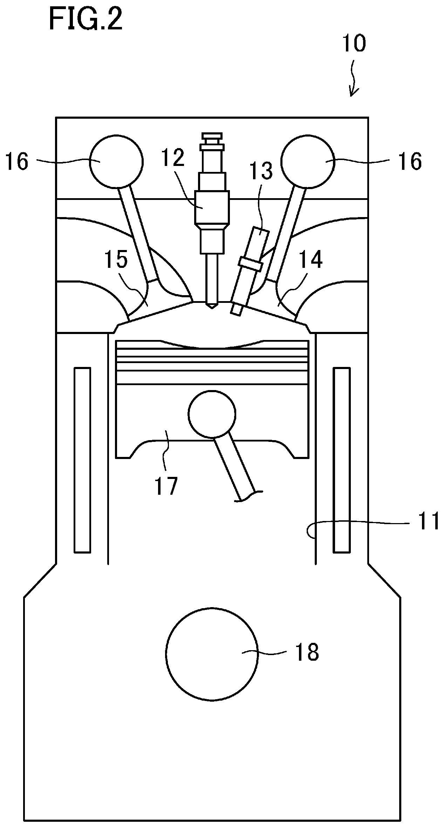

The engine 10 is, for example, a gasoline engine. As shown in FIG. 2, each cylinder 11 of the engine 10 includes an injector 12 configured to supply fuel into the cylinder 11 and a spark plug 13 for igniting an air-fuel mixture of the fuel and intake air supplied into the cylinder 11. In addition, the engine 10 includes, for each cylinder 11, an intake valve 14, an exhaust valve 15, and a valve train mechanism 16 that adjusts opening and closing operations of the intake valve 14 and the exhaust valve 15. In addition, the engine 10 is provided with pistons 17 each configured to reciprocate in the corresponding cylinder 11 and a crankshaft 18 connected to the pistons 17 via connecting rods. Note that the engine 10 may be a diesel engine. In a case of adopting a diesel engine as the engine 10, the spark plug 13 does not have to be provided. The injector 12, the spark plug 13, and the valve train mechanism 16 are examples of devices related to a powertrain.

The transmission 20 is, for example, a stepped automatic transmission. The transmission 20 is arranged on one side of the engine 10 along the cylinder bank. The transmission 20 includes an input shaft (not shown) coupled to the crankshaft 18 of the engine 10, and an output shaft (not shown) coupled to the input shaft via a plurality of reduction gears (not shown). The output shaft is connected to an axle 51 of the front wheels 50. The rotation of the crankshaft 18 is changed by the transmission 20 and transmitted to the front wheels 50. The transmission 20 is an example of the devices related to the powertrain.

The engine 10 and the transmission 20 are powertrain devices that generate a driving force for causing the vehicle 1 to travel. The operations of the engine 10 and the transmission 20 are controlled by a powertrain electric control unit (ECU) 200. For example, during the manual driving of the vehicle 1, the powertrain ECU 200 controls an injection amount from and a timing for fuel injection by the injector 12, a timing for ignition by the spark plug 13, timings for opening the intake and exhaust valves 14 and 15 by the valve train mechanism 16, and the duration of opening these valves, based on values such as a detected value of an accelerator position sensor SW1 that detects an accelerator position and any other sensor, which correspond to an operation amount of the accelerator pedal by the driver. In addition, during the manual driving of the vehicle 1, the powertrain ECU 200 adjusts the gear position of the transmission 20 based on a required driving force calculated from a detection result of a shift sensor SW2 that detects an operation of the shift lever by the driver and the accelerator position. In addition, during the assist driving or the autonomous driving of the vehicle 1, the powertrain ECU 200 basically calculates a controlled variable for each traveling device (injector 12 and any other component in this case) and outputs a control signal to the corresponding traveling device, so as to achieve a target driving force calculated by an arithmetic unit 110 described hereinafter. The powertrain ECU 200 is an example of a device controller.

The brake device 30 includes a brake pedal 31, a brake actuator 33, a booster 34 connected to the brake actuator 33, a master cylinder 35 connected to the booster 34, dynamic stability control (DSC) devices 36 that adjust the braking force, and brake pads 37 that actually brake the rotation of the front wheels 50. To the axle 51 of the front wheels 50, disc rotors 52 are provided. The brake device 30 is an electric brake, and actuates the brake actuator 33 in accordance with the operation amount of the brake pedal 31 detected by the brake sensor SW3, to actuate the brake pads 37 via the booster 34 and the master cylinder 35. The brake device 30 clamps the disc rotor 52 by the brake pads 37, to brake the rotation of each front wheel 50 by the frictional force generated between the brake pads 37 and the disc rotor 52. The brake actuator 33 and the DSC device 36 are examples of devices related to the brake.

The actuation of the brake device 30 is controlled by a brake microcomputer 300 and a DSC microcomputer 400. For example, during the manual driving of the vehicle 1, the brake microcomputer 300 controls the operation amount of the brake actuator 33 based on a detected value from the brake sensor SW3 that detects the operation amount of the brake pedal 31 by the driver, and any other sensor. In addition, the DSC microcomputer 400 controls actuation of the DSC device 36 to add a braking force to the front wheels 50, irrespective of an operation of the brake pedal 31 by the driver. In addition, during the assist driving or the autonomous driving of the vehicle 1, the brake microcomputer 300 basically calculates a controlled variable for each traveling device (brake actuator 33 in this case) and outputs a control signal to the corresponding traveling device, so as to achieve a target braking force calculated by the arithmetic unit 110 described hereinafter. The brake microcomputer 300 and the DSC microcomputer 400 are an example of the device controller. Note that the brake microcomputer 300 and the DSC microcomputer 400 may be configured by a single microcomputer.

The steering device 40 includes a steering wheel 41 to be operated by the driver, an electronic power assist steering (EPAS) device 42 configured to assist the driver in a steering operation, and a pinion shaft 43 coupled to the EPAS device 42. The EPAS device 42 includes an electric motor 42a, and a deceleration device 42b configured to reduce the driving force from the electric motor 42a and transmit the force to the pinion shaft 43. The steering device 40 is a steering system of a steer-by-wire type, and actuates the EPAS device 42 in accordance with the operation amount of the steering wheel 41 detected by a steering angle sensor SW4, so as to rotate the pinion shaft 43, thereby controlling the front wheels 50. The pinion shaft 43 is coupled to the front wheels 50 through a rack bar (not shown), and the rotation of the pinion shaft 43 is transmitted to the front wheels via the rack bar. The EPAS device 42 is an example of a steering related device.

The actuation of the steering device 40 is controlled by an EPAS microcomputer 500. For example, during the manual driving of the vehicle 1, the EPAS microcomputer 500 controls the operation amount of the electric motor 42a based on a detected value from the steering angle sensor SW4 and any other sensor. In addition, during the assist driving or the autonomous driving of the vehicle 1, the EPAS microcomputer 500 basically calculates a controlled variable for each traveling device (EPAS device 42 in this case) and outputs a control signal to the corresponding traveling device, so as to achieve a target steering amount calculated by the arithmetic unit 110 described hereinafter. The EPAS microcomputer 500 is an example of a device controller.

Although will be described later in detail, in the present embodiment, the powertrain ECU 200, the brake microcomputer 300, the DSC microcomputer 400, and the EPAS microcomputer 500 are configured to be capable of communicating with one another. In the following description, the powertrain ECU 200, the brake microcomputer 300, the DSC microcomputer 400, and the EPAS microcomputer 500 may be simply referred to as the device controller.

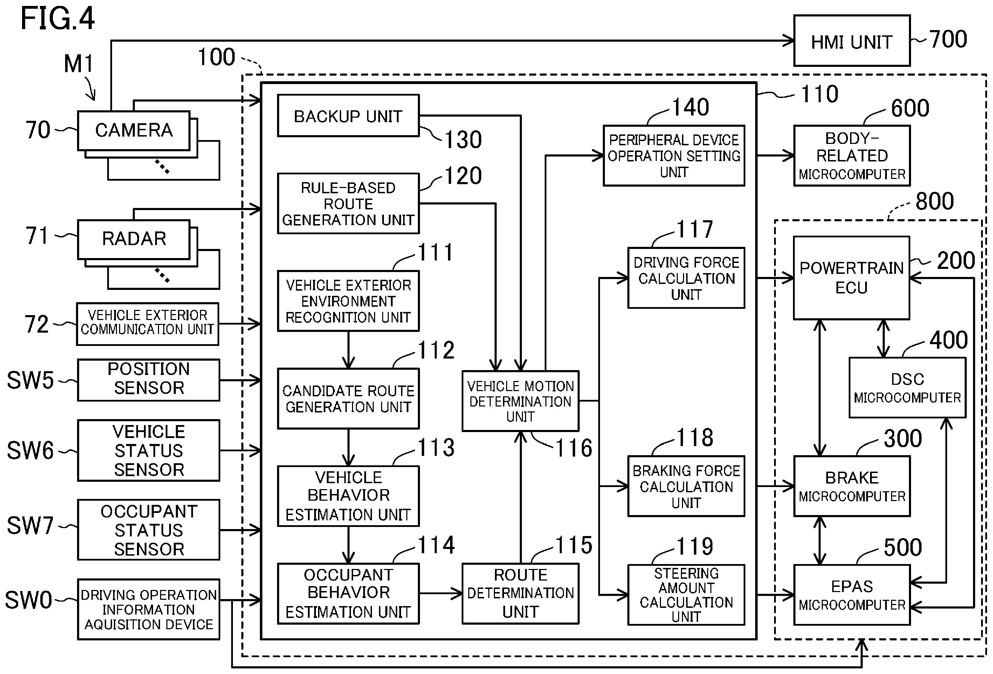

The cruise control system 100 of the present embodiment includes the arithmetic unit 110 that determines motions of the vehicle 1 to calculate a route to be traveled by the vehicle 1 and follow the route, so as to enable the assist driving and the autonomous driving. The arithmetic unit 110 is a microprocessor configured by one or more chips, and includes a CPU, a memory, and any other component. In the exemplary configuration of FIG. 3, the arithmetic unit 110 includes a processor and a memory. The memory stores modules which are each a software program executable by the processor. The functions of units of the arithmetic unit 110 shown in FIG. 4 are achieved, for example, by the processor executing the modules stored in the memory. In addition, the memory stores data of a model for use in the arithmetic unit 110. Note that a plurality of processors and a plurality of memories may be provided. Note that FIG. 4 shows a configuration to exert functions according to the present embodiment (route generating function described later), and does not necessarily show all the functions implemented in the arithmetic unit 110.

As shown in FIG. 4, the arithmetic unit 110 determines a target motion of the vehicle 1 based on outputs from a plurality of sensors and any other component, and controls actuation of the devices. The sensors and any other component that output information to the arithmetic unit 110 include (1) a plurality of cameras 70 provided to the body and any other part of the vehicle 1 and configured to take images of the environment outside the vehicle 1 (hereinafter, vehicle exterior environment); (2) a plurality of radars 71 provided to the body and any other part of the vehicle 1 and configured to detect an object and the like outside the vehicle 1; (3) a position sensor SW5 configured to detect the position of the vehicle 1 (vehicle position information) by using a global positioning system (GPS); (4) a vehicle status sensor SW6 configured to acquire a status of the vehicle 1, which includes outputs from sensors that detect the behavior of the vehicle, such as a vehicle speed sensor, an acceleration sensor, and a yaw rate sensor; (5) an occupant status sensor SW7 including an in-vehicle camera and the like and configured to acquire a status of an occupant in the vehicle 1; and (6) a driving operation information acquisition device SW0 configured to detect a driving operation of the driver. The accelerator position sensor SW1, the shift sensor SW2, the brake sensor SW3, and the steering angle sensor SW4 described above are examples of the driving operation information acquisition device SW0. In addition, the arithmetic unit 110 receives communication information from another vehicle around the subject vehicle or traffic information from a navigation system, through a vehicle exterior communication unit 72 connected to a network outside the vehicle.

The cameras 70 are arranged to image the surroundings of the vehicle 1 at 360° in the horizontal direction. Each camera 70 generates image data by capturing an optical image showing the vehicle exterior environment. Each camera 70 then outputs the image data generated to the arithmetic unit 110. The cameras 70 are examples of an out-of-vehicle information acquisition unit M1 that acquires information of the vehicle exterior environment.

The image data obtained by each camera 70 is also input to a human machine interface (HMI) unit 700, in addition to the arithmetic unit 110. The HMI unit 700 displays information based on the image data obtained, on a display device or the like in the vehicle.

The radars 71 are arranged so that the detection range covers 360° of the vehicle 1 in the horizontal direction, similarly to the cameras 70. The type of the radars 71 is not particularly limited. For example, a millimeter wave radar or an infrared radar can be adopted. The radars 71 are examples of an out-of-vehicle information acquisition unit M1 that acquires information of the vehicle exterior environment.

During the assist driving or the autonomous driving, the arithmetic unit 110 sets a traveling route of the vehicle 1 and sets a target motion of the vehicle 1 so as to follow the traveling route of the vehicle 1. The arithmetic unit 110 includes a vehicle exterior environment recognition unit 111 that recognizes the vehicle exterior environment based on outputs from the cameras 70 and the like to set a target motion of the vehicle 1, a candidate route generation unit 112 that calculates one or more candidate routes travelable by the vehicle 1 in accordance with the vehicle exterior environment recognized by the vehicle exterior environment recognition unit 111, a vehicle behavior estimation unit 113 that estimates a behavior of the vehicle 1 based on an output from the vehicle status sensor SW6, an occupant behavior estimation unit 114 that estimates a behavior of an occupant of the vehicle 1 based on an output from the occupant status sensor SW7, a route determination unit 115 that determines a route to be traveled by the vehicle 1, and a vehicle motion determination unit 116 that determines a target motion of the vehicle 1 for following the route determined by the route determination unit 115. The candidate route generation unit 112, the vehicle behavior estimation unit 113, the occupant behavior estimation unit 114, and the route determination unit 115 constitute a route setting unit configured to set the route to be traveled by the vehicle 1, in accordance with the vehicle exterior environment recognized by the vehicle exterior environment recognition unit 111.

In addition, as safety functions, the arithmetic unit 110 includes a rule-based route generation unit 120 configured to recognize an object outside the vehicle according to a predetermined rule and generate a traveling route that avoids the object, and a backup unit 130 configured to generate a traveling route that guides the vehicle 1 to a safety area such as a road shoulder.

### <Vehicle Exterior Environment Recognition Unit>

The vehicle exterior environment recognition unit 111 receives outputs from the cameras 70 and the radars 71 which are mounted on the vehicle 1 and recognizes the vehicle exterior environment. The recognized vehicle exterior environment includes at least a road and an obstacle. Here, it is assumed that the vehicle exterior environment recognition unit 111 recognizes the vehicle environment including the road and the obstacle by comparing the 3-dimensional information of the surroundings of the vehicle 1 with a vehicle external environment model, based on data from the cameras 70 and the radars 71. The vehicle external environment model is, for example, a learned model generated by deep learning, and allows recognition of a road, an obstacle, and the like with respect to 3-dimensional information of the surroundings of the vehicle.

For example, the vehicle exterior environment recognition unit 111 identifies a free space, that is, an area without an object, by processing images captured by the cameras 70. In this image processing, for example, a learned model generated by deep learning is used. Then, a 2-dimensional map representing the free space is generated. In addition, the vehicle exterior environment recognition unit 111 acquires information of an object around the vehicle 1 from outputs of the radars 71. This information is positioning information containing the position, the speed, and any other element of the object. Then, the vehicle exterior environment recognition unit 111 combines the 2-dimensional map thus generated with the positioning information of the object to generate a 3-dimensional map representing the surroundings of the vehicle 1. This process uses information of the installation positions of and the shooting directions of the cameras 70, and information of the installation positions of and the transmission direction of the radars 71. The vehicle exterior environment recognition unit 111 then compares the generated 3-dimensional map with the vehicle external environment model to recognize the vehicle environment including the road and the obstacle. Note that the deep learning uses a multilayer neural network (deep neutral network (DNN)). An example of the multilayer neural network is convolutional neural network (CNN).

### <Candidate Route Generation Unit>

The candidate route generation unit 112 generates candidate routes that can be traveled by the vehicle 1, based on an output from the vehicle exterior environment recognition unit 111, an output from the position sensor SW5, and information transmitted from the vehicle exterior communication unit 72. For example, the candidate route generation unit 112 generates a traveling route that avoids the obstacle recognized by the vehicle exterior environment recognition unit 111, on the road recognized by the vehicle exterior environment recognition unit 111. The output from the vehicle exterior environment recognition unit 111 includes, for example, traveling road information related to a traveling road on which the vehicle 1 travels. The traveling road information includes information related to the shape of the traveling road itself and information related to objects on the traveling road. The information related to the shape of the traveling road includes the shape of the traveling road (whether it is straight or curved, and the curvature), the width of the traveling road, the number of lanes, and the width of each lane. The information related to the objects includes the positions and speeds of the objects relative to the vehicle, and the attributes (e.g., the type or the moving directions) of the objects. Examples of the object types include a vehicle, a pedestrian, a road, and a section line.

Here, it is assumed that the candidate route generation unit 112 calculates a plurality of candidate routes by means of a state lattice method, and selects one or more candidate routes from among these candidate routes based on a route cost of each candidate route. However, the routes may be calculated by means of a different method.

The candidate route generation unit 112 sets a virtual grid area on the traveling road based on the traveling road information. The grid area has a plurality of grid points. Each grid point identifies the position on the traveling road. The candidate route generation unit 112 sets a predetermined grid point as a destination. Then, a plurality of candidate routes are calculated by a route search involving a plurality of grid points in the grid area. In the state lattice method, a route branches from a certain grid point to random grid points ahead in the traveling direction of the vehicle. Therefore, each candidate route is set so as to sequentially pass a plurality of grid points. Each candidate route includes time information indicating a time of passing each grid point, speed information related to the speed, acceleration, and any other element at each grid point, and information related to other vehicle motions.

The candidate route generation unit 112 selects one or more traveling routes from the plurality of candidate routes based on the route cost. The route cost herein includes, for example, the lane-centering degree, the acceleration of the vehicle, the steering angle, and the possibility of collision. Note that, when the candidate route generation unit 112 selects a plurality of traveling routes, the route determination unit 115 selects one of the traveling routes.

### <Vehicle Behavior Estimation Unit>

The vehicle behavior estimation unit 113 measures a status of the vehicle, from the outputs of sensors which detect the behavior of the vehicle, such as a vehicle speed sensor, an acceleration sensor, and a yaw rate sensor. The vehicle behavior estimation unit 113 generates a six-degrees-of-freedom (i.e., 6DoF) model of the vehicle indicating the behavior of the vehicle.

Here, the 6DoF model of the vehicle is obtained by modeling acceleration along three axes, namely, in the "forward/backward (surge)", "left/right (sway)", and "up/down (heave)" directions of the traveling vehicle, and the angular velocity along the three axes, namely, "pitch", "roll", and "yaw". That is, the 6DoF model of the vehicle is a numerical model not grasping the vehicle motion only on the plane (the forward/backward and left/right directions (i.e., the movement along the X-Y plane) and the yawing (along the Z-axis)) according to the classical vehicle motion engineering but reproducing the behavior of the vehicle using six axes in total. The vehicle motions along the six axes further include the pitching (along the Y-axis), rolling (along the X-axis) and the movement along the Z-axis (i.e., the up/down motion) of the vehicle body mounted on the four wheels with the suspension interposed therebetween.

The vehicle behavior estimation unit 113 applies the 6DoF model of the vehicle to the traveling route generated by the candidate route generation unit 112 to estimate the behavior of the vehicle 1 when following the traveling route.

### <Occupant Behavior Estimation Unit>

The occupant behavior estimation unit 114 specifically estimates the driver's health condition and emotion from a detection result from the occupant status sensor SW7. Examples of the health conditions include good condition, slightly tired condition, poor condition, and less conscious condition. Examples of the emotions include happy, normal, bored, annoyed, and uncomfortable emotions.

For example, the occupant behavior estimation unit 114 extracts a face image of the driver from an image captured by a camera installed inside the vehicle cabin, and identifies the driver. The extracted face image and information of the identified driver are provided as inputs to a human model. The human model is, for example, a learned model generated by deep learning, and outputs the health condition and the emotion of each person who may be the driver of the vehicle 1, from the face image. The occupant behavior estimation unit 114 outputs the health condition and the emotion of the driver output by the human model.

In addition, in a case of adopting a bio-information sensor, such as a skin temperature sensor, a heart beat sensor, a blood flow sensor, and a perspiration sensor, as the occupant status sensor SW7 for acquiring information of the driver, the occupant behavior estimation unit measures the bio-information of the driver from the output from the bio-information sensor. In this case, the human model uses the bio-information as the input, and outputs the health condition and the emotion of each person who may be the driver of the vehicle 1. The occupant behavior estimation unit 114 outputs the health condition and the emotion of the driver output by the human model.

In addition, as the human model, a model that estimates an emotion of a human in response to the behavior of the vehicle 1 may be used for each person who may be the driver of the vehicle 1. In this case, the model may be constructed by managing, in time sequence, the outputs of the vehicle behavior estimation unit 113, the bio-information of the driver, and the estimated emotional states. This model allows, for example, the relationship between changes in the driver' s emotion (the degree of wakefulness) and the behavior of the vehicle to be predicted.

The occupant behavior estimation unit 114 may include a human body model as the human model. The human body model specifies, for example, the weight of the head (e.g., 5 kg) and the strength of the muscles around the neck supporting against G-forces in the front, back, left, and right directions. The human body model outputs a predicted physical condition and subjective viewpoint of the occupant, when a motion (acceleration G-force or jerk) of the vehicle body is input. Examples of the physical condition of the occupant include comfortable /moderate /uncomfortable conditions, and examples of the subjective viewpoint include whether a certain event is unexpected or predictable. For example, a vehicle behavior that causes the head to lean backward even slightly is uncomfortable for an occupant. Therefore, a traveling route that causes the head to lean backward can be avoided by referring to the human body model. On the other hand, a vehicle behavior that causes the head of the occupant to lean forward in a bowing manner does not immediately lead to discomfort. This is because the occupant is easily able to resist such a force. Therefore, such a traveling route that causes the head to lean forward may be selected. Alternatively, referring to the human body model allows a target motion to be determined so that, for example, the head of the occupant does not swing, or to be dynamically determined so that the occupant is active.

The occupant behavior estimation unit 114 applies a human model to the vehicle behavior estimated by the vehicle behavior estimation unit 113 to estimate a change in the health conditions or the feeling of the current driver with respect to the vehicle behavior.

### <Route Determination unit>

The route determination unit 115 determines the route along which the vehicle 1 is to travel, based on an output from the occupant behavior estimation unit 114. If the number of routes generated by the candidate route generation unit 112 is one, the route determination unit 115 determines that route as the route to be traveled by the vehicle 1. If the candidate route generation unit 112 generates a plurality of routes, a route that the occupant (in particular, the driver) feels most comfortable with, that is, a route that the driver does not perceive as a redundant route, such as a route too cautiously avoiding an obstacle, is selected out of the plurality of candidate routes, in consideration of an output from the occupant behavior estimation unit 114.

### <Rule-Based Route Generation Unit>

The rule-based route generation unit 120 recognizes an object outside the vehicle in accordance with a predetermined rule based on outputs from the cameras 70 and radars 71, without use of deep learning, and generates a traveling route that avoids such an object. Similarly to the candidate route generation unit 112, it is assumed that the rule-based route generation unit 120 also calculates a plurality of candidate routes by means of the state lattice method, and selects one or more candidate routes from among these candidate routes based on a route cost of each candidate route. In the rule-based route generation unit 120, the route cost is calculated based on, for example, a rule of preventing the vehicle from entering an area within several meters from the object. Another technique may be used for calculation of the route also in this rule-based route generation unit 120.

Information of a route generated by the rule-based route generation unit 120 is input to the vehicle motion determination unit 116.

### <Backup Unit>

The backup unit 130 generates a traveling route that guides the vehicle 1 to a safe area such as the road shoulder, based on outputs from the cameras 70 and radars 71, in an occasion of failure of a sensor or any other component, or when the occupant is not feeling well. For example, from the information given by the position sensor SW5, the backup unit 130 sets a safety area in which the vehicle 1 can be stopped in case of emergency, and generates a traveling route to reach the safety area. Similarly to the candidate route generation unit 112, it is assumed that the backup unit 130 also calculates a plurality of candidate routes by means of the state lattice method, and selects one or more candidate routes from among these candidate routes based on a route cost of each candidate route. Another technique may be used for calculation of the route also in this backup unit 130.

Information of a route generated by the backup unit 130 is input to the vehicle motion determination unit 116.

### <Vehicle Motion Determination unit>

The vehicle motion determination unit 116 determines a target motion on a traveling route determined by the route determination unit 115. The target motion means steering and acceleration/deceleration to follow the traveling route. In addition, with reference to the 6DoF model of the vehicle, the vehicle motion determination unit 116 calculates the motion of the vehicle body on the traveling route selected by the route determination unit 115.

The vehicle motion determination unit 116 determines the target motion to follow the traveling route generated by the rule-based route generation unit 120.

The vehicle motion determination unit 116 determines the target motion to follow the traveling route generated by the backup unit 130.

When the traveling route determined by the route determination unit 115 significantly deviates from a traveling route generated by the rule-based route generation unit 120, the vehicle motion determination unit 116 selects the traveling route generated by the rule-based route generation unit 120 as the route to be traveled by the vehicle 1.

In an occasion of failure of sensors or any other component (in particular, cameras 70 or radars 71) or in a case where the occupant is not feeling well, the vehicle motion determination unit 116 selects the traveling route generated by the backup unit 130 as the route to be traveled by the vehicle 1.

### <Physical Amount Calculation Unit>

A physical amount calculation unit includes a driving force calculation unit 117, a braking force calculation unit 118, and a steering amount calculation unit 119. To achieve the target motion, the driving force calculation unit 117 calculates a target driving force to be generated by the powertrain devices (the engine 10 and the transmission 20). To achieve the target motion, the braking force calculation unit 118 calculates a target braking force to be generated by the brake device 30. To achieve the target motion, the steering amount calculation unit 119 calculates a target steering amount to be generated by the steering device 40.

### <Peripheral Device Operation Setting Unit>

A peripheral device operation setting unit 140 sets operations of body-related devices of the vehicle 1, such as lamps and doors, based on outputs from the vehicle motion determination unit 116. The peripheral device operation setting unit 140 determines, for example, the directions of lamps, while the vehicle 1 follows the traveling route determined by the route determination unit 115. In addition, for example, at a time of guiding the vehicle 1 to the safety area set by the backup unit 130, the peripheral device operation setting unit 140 sets operations so that the hazard lamp is turned on and the doors are unlocked after the vehicle 1 reaches the safety area.

### <Output Destination of Arithmetic Unit>

An arithmetic result of the arithmetic unit 110 is output to the powertrain ECU 200, the brake microcomputer 300, the EPAS microcomputer 500, and a body-related microcomputer 600. Specifically, information related to the target driving force calculated by the driving force calculation unit 117 is input to the powertrain ECU 200. Information related to the target braking force calculated by the braking force calculation unit 118 is input to the brake microcomputer 300. Information related to the target steering amount calculated by the steering amount calculation unit 119 is input to the EPAS microcomputer 500. Information related to the operations of the body-related devices set by the peripheral device operation setting unit 140 is input to the body-related microcomputer 600. In the following description, the powertrain ECU 200, the brake microcomputer 300, the EPAS microcomputer 500, and the body-related microcomputer 600 may be collectively referred to as a "control unit 800."

As described hereinabove, the powertrain ECU 200 basically calculates fuel injection timing for the injector 12 and ignition timing for the spark plug 13 so as to achieve the target driving force, and outputs control signals to these relevant traveling devices. The brake microcomputer 300 basically calculates a controlled variable of the brake actuator 33 so as to achieve the target driving force, and outputs a control signal to the brake actuator 33. The EPAS microcomputer 500 basically calculates an electric current amount to be supplied to the EPAS device 42 so as to achieve the target steering amount, and outputs a control signal to the EPAS device 42.

As described hereinabove, in the present embodiment, the arithmetic unit 110 only calculates the target physical amount to be output from each traveling device, and the controlled variables of traveling devices are calculated by the device controllers 200 to 500. This reduces the amount of calculation by the arithmetic unit 110, and improves the speed of calculation by the arithmetic unit 110. In addition, since each of the device controllers 200 to 500 simply has to calculate the actual controlled variables and output control signals to the traveling devices (injector 12 and any other component), the processing speed is fast. As a result, the responsiveness of the traveling devices to the vehicle exterior environment can be improved.

In addition, by having the device controllers 200 to 500 calculate the controlled variables, the calculation speed of the arithmetic unit 110 can be slower than those of the device controllers 200 to 500, because the arithmetic unit 110 only needs to roughly calculate physical amounts. Thus, the accuracy of calculation by the arithmetic unit 110 is improved.

As shown in FIG. 4, in the present embodiment, the powertrain ECU 200, the brake microcomputer 300, the DSC microcomputer 400, and the EPAS microcomputer 500 are configured to be capable of communicating with one another. The powertrain ECU 200, the brake microcomputer 300, the DSC microcomputer 400, and the EPAS microcomputer 500 share information related to the control variables of the traveling devices with one another, and are configured to be capable of executing control to allow the traveling devices to cooperate with one another.

Thus, for example, while a road surface is slippery, the need arises to reduce the rotation of the wheels (to perform so-called traction control) to prevent the wheels from spinning. To reduce spinning of the wheels, the output of the powertrain may be reduced, or the braking force of the brake device 30 may be used. However, since the powertrain ECU 200 and the brake microcomputer 300 are capable of communicating with each other, an optimum countermeasure can be taken using both of the powertrain and the brake device 30.

In addition, for example, if, when the vehicle 1 is to corner, the control variables of the powertrain and the brake device 30 (including the DSC device 36) are finely adjusted in accordance with the target steering amount, rolling and pitching that causes a front portion of the vehicle 1 to move downward are induced in synchronization with each other to give rise to diagonal rolling. Giving rise to the diagonal rolling increases the load applied to the outer front wheel 50. This allows the vehicle to corner with small steering angle, and can reduce the rolling resistance to the vehicle 1.

In another example, under vehicle stabilization control (dynamic stability control), if a difference exists between each of a target yaw rate and a target lateral acceleration calculated as those of the vehicle 1 that is ideally cornering, based on the current steering angle and the vehicle speed, and an associated one of the current yaw rate and the current lateral acceleration, the brake devices 30 for the four wheels are individually operated, or the output of the powertrain is regulated, so that these values return to the target values. The DSC microcomputer 400 has had to comply with a communication protocol, and has acquired information related to instability of the vehicle from a yaw rate sensor and a wheel speed sensor through a relatively low speed controller area network (CAN). The DSC microcomputer 400 has further instructed the powertrain ECU 200 and the brake microcomputer 300 to operate through the CAN. Thus, a large amount of time has been required. In the present embodiment, information related to the controlled variables can be directly exchanged among the microcomputers. Thus, the period from the detection of the instability of the vehicle to the stability control, i.e., braking of the wheels or the start of regulation of the output, can be remarkably shortened. Although stability control performed while the driver countersteers has been relaxed based on his/her expectations, the stability control can be relaxed in real time with reference to the steering velocity provided by the EPAS microcomputer 500 and other elements.

In still another example, in the case of a high-powered front-wheel-drive vehicle, output control interlocked with the steering angle may be performed to reduce the output of the powertrain while the accelerator is stepped on with a large steering angle, thereby preventing the vehicle from becoming instable beforehand. This control can also reduce the output as soon as the powertrain ECU 200 refers to the steering angle and steering angle signal in the EPAS microcomputer 500. This can provide a driving feel that is suitable for the driver without being recognized as sudden intervention.

### <Reflection of Driving Operation Information of Driver>

The present embodiment is characterized in that operation input information which has been input to the control unit 800 in the known art (a mode in which driving has not been automated) and which is related to the driver's operations entered into the driving operation information acquisition device SW0 is imparted to the arithmetic unit 110 as well. In other words, the present embodiment is characterized in that the operation input information is input to both of the arithmetic unit 110 and the control unit 800 in parallel. The operation input information related to the driver's operations entered into the driving operation information acquisition device SW0 is an example of the driving operation information.

The arithmetic unit 110 may be configured to reflect an input from the driving operation information acquisition device SW0 in the route that is to be determined by the route determination unit 115, for example.

For example, if, during autonomous driving, a plurality of travelable candidate routes are calculated, one of the candidate routes to be travelled by the vehicle 1 may be finally determined in accordance with the operation amount and direction of the steering wheel 41 detected by the steering angle sensor SW4.

For example, if, during autonomous driving, the driver wants to slightly reduce the speed of the motor vehicle to see the scenery or to check ambient conditions, or unexpectedly wants to drop by a facility that has come into sight or any other place, the driver's intention may be reflected in an output from the arithmetic unit 110 when the driver operates the driving operation acquisition device SW0. For example, if the driver operates the brake pedal 31, control may be performed to gradually reduce the vehicle speed from the speed determined by the vehicle motion determination unit 116. In this case, the driver's intention may be reflected in a process performed by the vehicle motion determination unit 116, or may be reflected in calculation performed by the braking force calculation unit 118 at a later stage.

Furthermore, in the present embodiment, the output of the driving operation information acquisition device SW0 is input to the control unit 800 as well.

In the control unit 800, the driving operation information received from the driving operation information acquisition device SW0 can be used for verification, correction, or any other process of the calculation result obtained by the arithmetic unit 110. For example, comparisons between target physical amounts output from the driving force calculation unit 117, the braking force calculation unit 118, and the steering amount calculation unit 119, and the associated physical amounts calculated in the control unit 800 (hereinafter referred to as the "known physical amounts") allow the calculation results obtained by the calculation units 117 to 119 to be reviewed for correctness. Then, for example, if the difference between the target physical amount output from each of the calculation units 117 to 119 and an associated one of the known physical amounts exceeds a predetermined reference value determined in advance, correction can be performed through a request made of the arithmetic unit 110 for another calculation or through adjustment of the difference between the target physical amount and the associated known physical amount. If the driving of the motor vehicle that has been driven to provide the known physical amounts (without driving automation) is switched to autonomous driving, the timing of this transition may be adjusted to prevent the driver from feeling uncomfortable. For example, this switching may be made if the difference between the target physical amount and the associated known physical amount is smaller than or equal to the predetermined reference value. The same statement applies to a situation where, contrary to the foregoing situation, switching is made from autonomous driving to a state "without driving automation."

### <Control To Be Performed in Event of Abnormal Conditions>

Next, control to be performed in the event of abnormal conditions will be described.

During traveling of the vehicle 1, abnormal conditions related to the traveling of the vehicle 1, such as knocking in the engine 10 or slipping of the front wheels 50, may occur. When such an abnormal condition has occurred, each traveling device needs to be quickly controlled to eliminate the abnormal condition. As described above, the arithmetic unit 110 recognizes the vehicle exterior environment using deep learning, and performs a huge amount of calculation to calculate the route of the vehicle 1. Thus, calculation performed through the arithmetic unit 110 to eliminate the abnormal condition may delay addressing the need.

To address this problem, in the present embodiment, when an abnormal condition related to the traveling of the vehicle 1 is detected, the device controllers 200 to 500 calculate the controlled variables of the associated traveling devices without using the arithmetic unit 110 to eliminate the abnormal condition, and output the resultant control signals to the associated traveling devices.

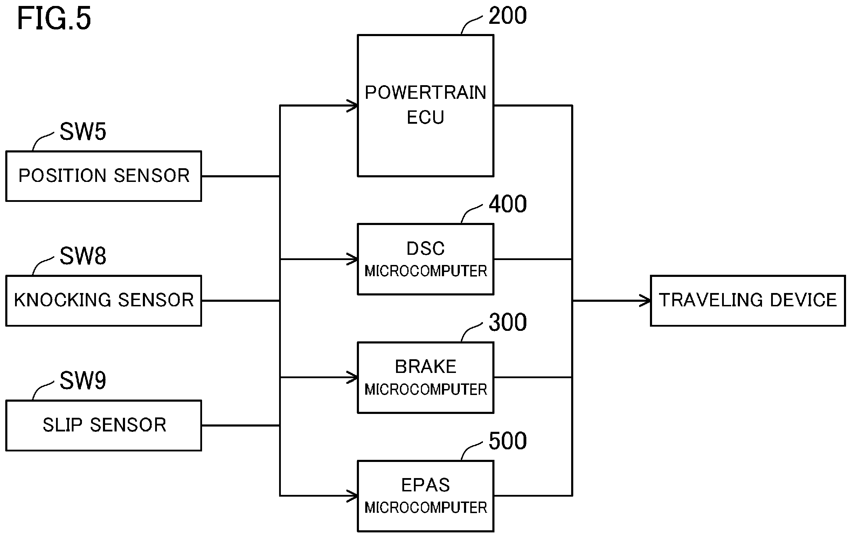

FIG. 5 shows an example of the relationship between each of sensors SW5, SW8, and SW9 detecting abnormal conditions related to the traveling of the vehicle 1 and the device controllers 200, 300, 400, and 500. In FIG. 5, examples of the sensors detecting abnormal conditions related to the traveling of the vehicle 1 include the position sensor SW5, the knocking sensor SW8, and the slip sensor SW9. However, sensors except these sensors may be provided. Known sensors can be used as the knocking sensor SW8 and the slip sensor SW9. Alternatively, for example, outputs from the sensors forming the driving operation information acquisition device SW0 (the accelerator position sensor SW1, the shift sensor SW2, the brake sensor SW3, and the steering angle sensor SW4) may be used.

For example, when knocking is detected by the knocking sensor SW8, a detection signal is input to each of the device controllers 200 to 500 (in particular, the powertrain ECU 200). After the detection signal is input, for example, the powertrain ECU 200 adjusts the fuel injection timing for the injector 12 and ignition timing for the spark plug 13, thereby reducing knocking. Meanwhile, the powertrain ECU 200 calculates the controlled variables of the traveling devices while allowing the driving force output from the powertrain to differ from the target driving force. At this time, for example, outputs from the driving operation information acquisition device SW0 may be used. For example, if the driving force differs from the target driving force, and significantly deviates from the driving force produced by the driver ' s operation, the vehicle speed may be adjusted in accordance with the difference from the speed associated with the target driving force so that the driver is less likely to feel uncomfortable.

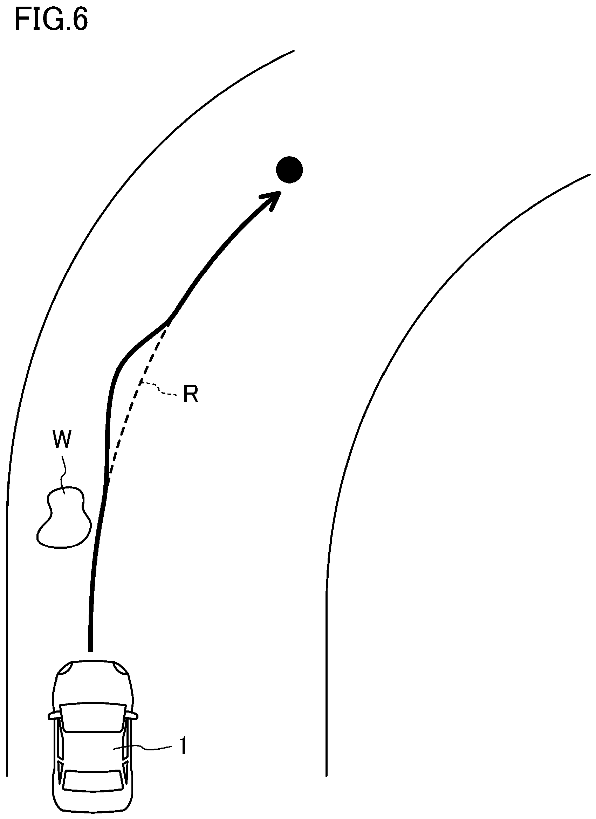

FIG. 6 illustrates an example of the behavior of the vehicle 1 that is slipping. In FIG. 6, the solid line indicates an actual traveling route of the vehicle 1, and the dotted line indicates a traveling route set by the arithmetic unit 110 (hereinafter referred to as a "theoretical traveling route R"). In FIG. 6, the solid and dotted lines partially overlap with each other. In FIG. 6, the filled circle indicates a target location of the vehicle 1.

Suppose that as shown in FIG. 6, a puddle W is formed at a location along the traveling route of the vehicle 1, and the front wheels of the vehicle 1 enter the puddle W to slip. In this case, as shown in FIG. 6, the vehicle 1 temporarily deviates from the theoretical traveling route R. The slipping of the front wheels of the vehicle 1 is detected by the slip sensor SW9 (see FIG. 5), and a deviation from the theoretical traveling route R is detected by the position sensor SW5 (see FIG. 5). The resultant detection signals are input to the associated device controllers 200 to 500. Thereafter, for example, the brake microcomputer 300 actuates the brake actuator 33 so as to increase the braking force of the front wheels. In addition, the EPAS microcomputer 500 actuates the EPAS device 42 so as to return the vehicle 1 to the theoretical traveling route R. At this time, communication between the brake microcomputer 300 and the EPAS microcomputer 500 can optimize the controlled variable of the EPAS device 42 with consideration given to the braking force generated by the brake device 30. Thus, as shown in FIG. 6, the vehicle 1 can be quickly and smoothly returned to the theoretical traveling route R to stabilize the traveling of the vehicle 1. Meanwhile, the driver may operate the steering wheel in haste. In this case, the speed at which the vehicle 1 is returned to the theoretical traveling route R may be adjusted in response to the steering of the driver. For example, if the driver steers the vehicle to the degree to which the vehicle travels past the theoretical traveling route R, the vehicle may accordingly pass the theoretical traveling route R once, and then may be operated to gradually return to the theoretical traveling route R.

As can be seen, when an abnormal condition related to the traveling of the vehicle 1 is detected, the device controllers 200 to 500 calculate the controlled variables of the associated traveling devices without using the arithmetic unit 110 to eliminate the abnormal condition, and output the resultant control signals to the associated traveling devices. This can improve the responsiveness of the traveling devices to the vehicle exterior environment. In addition, the uncomfortable feeling caused by the behavior of the vehicle 1 corresponding to the driver's own operation can be reduced.

In summary, in the present embodiment, the arithmetic unit 110 and the device controllers (the control unit 800) are provided. The arithmetic unit 110 generates a route which is located on the road and which avoids the obstacle, based on outputs from the vehicle exterior information acquisition device M1 including the cameras 70 and the radars 71, determines a target motion of the motor vehicle during the traveling of the motor vehicle along the route, and calculates the physical momentums of the traveling devices for achieving the target motion. The device controllers generate actuation control signals for controlling actuations of the traveling devices mounted in the motor vehicle, based on the calculation results of the arithmetic unit 110, and output the generated actuation control signals to the traveling devices (e.g., the engine 10, the transmission 20, the brake device 30, and the steering device 40). Then, the driving operation information on operations performed by the driver is given to each of the arithmetic unit 110 and the device controllers. In the arithmetic unit 110, the driving operation information is reflected in the calculation results of the physical momentums. In the device controllers, the driving operation information is reflected in control of the actuations of the traveling devices.

As can be seen, in the arithmetic unit 110, the driving operation information is reflected in the calculation results of the physical momentums. This can prevent the driver from feeling uncomfortable about the timing and degree of the driver assistance intervention. For example, if the calculation results of the physical momentums contrary to the driver's operation have been obtained, control can be performed to shift the timing of the driver assistance intervention, or to gradually increase the assist amount or the proportion of control for autonomous driving. In addition, for example, at the point in time when a value obtained by the driver's operation and the associated calculation result obtained by the arithmetic unit 110 are relatively close to each other, an operation, such as the driver assistance intervention, can be performed. Control that reflects a driver's intention without impairing the driver's comfort can be achieved even if the motor vehicle intervenes in driving (e.g., in the case of adopting autonomous driving).

Furthermore, when the device controllers each generate an actuation control signal for the associated traveling device, the driving operation information is reflected in the associated physical momentums calculated by the arithmetic unit 110. This allows the output result of the arithmetic unit 110 to be reviewed or corrected, and allows switching to be made from autonomous driving to manual driving.

### (Second Embodiment)

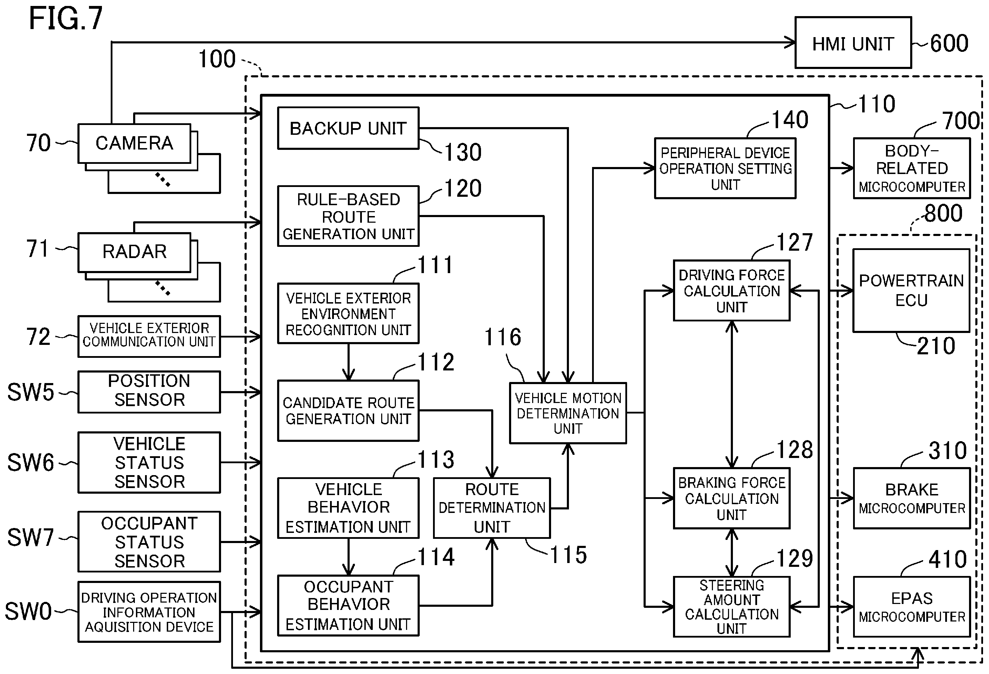

FIG. 7 schematically shows a block configuration of a control system of a vehicle 1 according to the present embodiment. In FIG. 7, the same reference numerals as those in FIG. 4 are used to represent equivalent components. In the following description, the equivalent components will not be described.

The configuration of FIG. 7 is different from that of FIG. 4 in that a driving force calculation unit 127, a braking force calculation unit 128, and a steering amount calculation unit 129 operate cooperatively in an arithmetic unit 110. Operations of a powertrain ECU 210, a brake microcomputer 310, and an EPAS microcomputer 410 are different from those in FIG. 1.

### <Physical Amount Calculation Unit>

Just like the case shown in FIG. 4, to achieve a target motion, the driving force calculation unit 127 calculates a target driving force to be generated by the powertrain devices (the engine 10 and the transmission 20). To achieve the target motion, the braking force calculation unit 128 calculates a target braking force to be generated by the brake device 30. To achieve the target motion, the steering amount calculation unit 129 calculates a target steering amount to be generated by the steering device 40.

Here, in the configuration of FIG. 7, the driving force calculation unit 127, the braking force calculation unit 128, and the steering amount calculation unit 129 can communicate with one another. In addition, the driving force calculation unit 127, the braking force calculation unit 128, and the steering amount calculation unit 129 share information related to the physical amounts calculated by these units with one another, and are configured to be capable of calculating associated target physical amounts so as to be capable of executing control to allow the traveling devices to cooperate with one another.

Thus, for example, while a road surface is slippery, the need arises to reduce the rotation of the wheels (to perform so-called traction control) to prevent the wheels from spinning. To reduce spinning of the wheels, the output of the powertrain may be reduced, or the braking force of the brake device 30 may be used. However, if the driving force calculation unit 127 and the braking force calculation unit 128 respectively set the driving force to be generated by the powertrain and the braking force to be generated by the brake device 30 to associated optimum values, the running performance of the vehicle can be stabilized.

When the vehicle 1 is to corner, the driving force calculation unit 127 calculates a target driving force based on the driving state of the vehicle (the driving state determined by the vehicle motion determination unit 116), calculates the amount of the driving force reduced in response to the target steering amount calculated by the steering amount calculation unit 129, and then calculates a final target driving force of the vehicle in response to the target driving force and the amount of the driving force reduced. This allows a deceleration corresponding to the target steering amount to be produced. As a result, rolling and pitching that causes a front portion of the vehicle 1 to move downward are induced in synchronization with each other to give rise to diagonal rolling. Giving rise to the diagonal rolling increases the load applied to the outer front wheel 50. This allows the vehicle to corner with small steering angle, and can reduce the rolling resistance to the vehicle 1.

### <Output Destination of Arithmetic Unit>

An arithmetic result of the arithmetic unit 110 is output to the powertrain ECU 210, the brake microcomputer 310, the EPAS microcomputer 410, and a body-related microcomputer 600. Specifically, information related to the target driving force calculated by the driving force calculation unit 127 is input to the powertrain ECU 210. Information related to the target braking force calculated by the braking force calculation unit 128 is input to the brake microcomputer 310. Information related to the target steering amount calculated by the steering amount calculation unit 129 is input to the EPAS microcomputer 410. Information related to the operations of the body-related devices set by the peripheral device operation setting unit 140 is input to the body-related microcomputer 600. Here, in the present embodiment, the driving force calculation unit 127, the braking force calculation unit 128, and the steering amount calculation unit 129 share information related to the physical amounts calculated by these units with one another, and are configured to be capable of executing control to allow the traveling devices to cooperate with one another. Thus, in the present embodiment, the powertrain ECU 210, the brake microcomputer 310, and the EPAS microcomputer 410 merely need to calculate actual controlled variables based on the outputs from the driving force calculation unit 127, the braking force calculation unit 128, and the steering amount calculation unit 129, respectively, and to output the resultant control signals to the traveling devices (e.g., the injector 12). This can reduce the sizes of the device controllers 210 to 410.

Also in the present embodiment, the operation input information on the driver's operations output from the driving operation information acquisition device SW0 is input to both the arithmetic unit 110 and a control unit 800. The control unit 800 includes the powertrain ECU 210, the brake microcomputer 310, and the EPAS microcomputer 410.

Thus, just like the first embodiment, the arithmetic unit 110 can be configured to reflect an input from the driving operation information acquisition device SW0 in the route that is to be determined by the route determination unit 115, for example. Control may be performed such that the driver's intention is reflected in the outputs from the arithmetic unit 110.

Furthermore, an output from the driving operation information acquisition device SW0 is input also to the control unit 800. Thus, this output can be used for verification, correction, or any other process of the arithmetic result obtained by the arithmetic unit 110.

As can be seen from the foregoing description, also in the present embodiment, just like the first embodiment, control that reflects the driver's intention without impairing the driver' s comfort can be achieved even if the motor vehicle intervenes in driving (e.g., in the case of adopting autonomous driving).

### <Other Control Manners>

The driving force calculation unit 117, the braking force calculation unit 118, and the steering amount calculation unit 119 may be configured to modify the target driving force and other associated elements in accordance with the status of the driver of the vehicle 1, during the assist driving of the vehicle 1. For example, when the driver enjoys driving (when the driver feels "happy"), the target driving force and other associated elements may be reduced to make driving as close as possible to manual driving. On the other hand, when the driver is not feeling well, the target driving force and other associated elements may be increased to make the driving as close as possible to the autonomous driving.

### (Other Embodiments)

The present invention is not limited to the embodiments described above, and may be modified within the scope of the claims.

For example, in the above-described embodiments, the route determination unit 115 determines the route to be travelled by the vehicle 1. However, the present invention is not limited to this, and the route determination unit 115 may be omitted. In this case, the vehicle motion determination unit 116 may determine the route to be traveled by the vehicle 1. That is, the vehicle motion determination unit 116 may serve as a part of the route setting unit as well as a target motion determination unit.

In addition, in the above-described embodiments, the driving force calculation unit 117, the braking force calculation unit 118, and the steering amount calculation unit 119 calculate target physical amounts such as a target driving force. However, the present invention is not limited to this. The driving force calculation unit 117, the braking force calculation unit 118, and the steering amount calculation unit 119 may be omitted, and the target physical amounts may be calculated by the vehicle motion determination unit 116. That is, the vehicle motion determination unit 116 may serve as the target motion determination unit as well as a physical amount calculation unit.

### INDUSTRIAL APPLICABILITY

The present disclosure is usable as a vehicle cruise control system to control traveling of the vehicle.

### DESCRIPTION OF REFERENCE CHARACTERS

- 1: Vehicle
- 100: Vehicle Cruise Control System
- 110: Arithmetic Unit
- 200: Powertrain ECU 200 (Device Controller)
- 300: Brake Microcomputer (Device Controller)
- 400: DSC Microcomputer (Device Controller)

## Claims

1. A motor vehicle cruise control system (100) for controlling traveling of a motor vehicle (1), comprising:
an arithmetic unit (110) configured to generate a route that avoids an obstacle on a road, based on an output from a vehicle exterior information acquisition device, determine a target motion of the motor vehicle during traveling of the motor vehicle along the route, and calculate a target physical amount to be output from a traveling device for achieving the target motion, the vehicle exterior information acquisition device being configured to acquire information on an environment outside the motor vehicle; and
a device controller configured to generate an actuation control signal for controlling an actuation of the traveling device mounted in the motor vehicle, based on the target physical amount obtained by the arithmetic unit, and output the actuation control signal to the traveling device,
driving operation information on an operation performed by a driver being input to both the arithmetic unit and the device controller in parallel,
the arithmetic unit being configured to reflect the driving operation information in the route that is determined in the process of determining the target motion,
the device controller being configured to reflect the driving operation information in the control of the actuation of the traveling device, wherein the device controller generates manual driving information for controlling the actuation of the traveling device, based on the driving operation information on the operation performed by the driver, and corrects the actuation control signal based on the driving operation information if a behavior of the traveling device based on the actuation control signal deviates from a motion based on the manual driving information by an amount greater than or equal to a predetermined reference.

2. The motor vehicle cruise control system of claim 1, wherein
the device controller generates a manual driving signal for controlling the actuation of the traveling device, based on the driving operation information on the operation performed by the driver, and outputs the manual driving signal, instead of the actuation control signal, to the traveling device if a predetermined condition determined in advance is satisfied.

## Patentansprüche

1. Kraftfahrzeuggeschwindigkeitsregelungssystem (100) zum Steuern des Fahrens eines Kraftfahrzeugs (1), welches aufweist:
eine Recheneinheit (110), die konfiguriert ist, um eine Route, die ein Hindernis auf einer Straße vermeidet, basierend auf einer Ausgabe von einer Vorrichtung zur Erfassung von Fahrzeugaußenbereichsinformationen zu erzeugen, eine Zielbewegung des Kraftfahrzeugs während des Fahrens des Kraftfahrzeugs entlang der Route zu bestimmen, und eine physikalische Zielgröße zu berechnen, die aus einer fahrenden Vorrichtung auszugeben ist, um die Zielbewegung zu erzielen, wobei die Vorrichtung zur Erfassung von Fahrzeugaußenbereichsinformationen konfiguriert ist, um Informationen über eine Umgebung außerhalb des Kraftfahrzeugs zu erfassen; und
eine Vorrichtungssteuerung, die konfiguriert ist, um ein Betätigungssteuersignal zum Steuern einer Betätigung der fahrenden Vorrichtung, die in dem Kraftfahrzeug montiert ist, basierend auf der physikalischen Zielgröße zu erzeugen, die durch die Recheneinheit erhalten wird, und das Betätigungssteuersignal an die fahrende Vorrichtung auszugeben,
wobei Fahrbetriebsinformationen über einen Betrieb, der von einem Fahrer durchgeführt wird, parallel sowohl in die Recheneinheit als auch in die Vorrichtungssteuerung eingegeben werden,
wobei die Recheneinheit konfiguriert ist, um die Fahrbetriebsinformationen in der Route wiederzugeben, die in dem Prozess des Bestimmens der Zielbewegung bestimmt wird,
wobei die Vorrichtungssteuerung konfiguriert ist, um die Fahrbetriebsinformationen bei der Steuerung der Betätigung der fahrenden Vorrichtung wiederzugeben, wobei die Vorrichtungssteuerung manuelle Fahrinformationen zum Steuern der Betätigung der fahrenden Vorrichtung basierend auf den Fahrbetriebsinformationen über den Betrieb, der von dem Fahrer durchgeführt wird, erstellt und das Betätigungssteuersignal basierend auf den Fahrbetriebsinformationen korrigiert, wenn ein Verhalten der fahrenden Vorrichtung basierend auf dem Betätigungssteuersignal von einer Bewegung basierend auf den manuellen Fahrinformationen um einen Betrag abweicht, der größer als oder so groß wie ein vorgegebener Referenzwert ist.

2. Kraftfahrzeuggeschwindigkeitsregelungssystem nach Anspruch 1, wobei
die Vorrichtungssteuerung ein manuelles Fahrsignal zum Steuern der Betätigung der fahrenden Vorrichtung basierend auf den Fahrbetriebsinformationen über den Betrieb, der von dem Fahrer durchgeführt wird, erzeugt und das manuelle Fahrsignal anstelle des Betätigungssteuersignals an die fahrende Vorrichtung ausgibt, wenn eine vorgegebene Bedingung erfüllt wird, die vorab bestimmt wird.

## Revendications

1. Système de régulation de vitesse de véhicule à moteur (100) pour commander le déplacement d'un véhicule à moteur (1), comprenant :
une unité arithmétique (110) configurée pour générer un itinéraire qui évite un obstacle sur une route, sur la base d'une sortie provenant d'un dispositif d'acquisition d'informations extérieures de véhicule, pour déterminer un mouvement cible du véhicule à moteur pendant le déplacement du véhicule à moteur le long de l'itinéraire, et pour calculer une valeur physique cible à délivrer en sortie depuis un dispositif de déplacement pour obtenir le mouvement cible, le dispositif d'acquisition d'informations extérieures de véhicule étant configuré pour acquérir des informations sur un environnement extérieur au véhicule à moteur ; et
un dispositif de commande de dispositif configuré pour générer un signal de commande d'actionnement pour commander un actionnement du dispositif de déplacement monté dans le véhicule à moteur, sur la base de la valeur physique cible obtenue par l'unité arithmétique, et pour délivrer en sortie le signal de commande d'actionnement au dispositif de déplacement,
des informations d'opération de conduite concernant une opération effectuée par un conducteur qui sont entrées à la fois dans l'unité arithmétique et le dispositif de commande de dispositif en parallèle,
l'unité arithmétique étant configurée pour refléter les informations d'opération de conduite sur l'itinéraire qui est déterminé dans le processus de détermination du mouvement cible,
le dispositif de commande de dispositif étant configuré pour refléter les informations d'opération de conduite dans la commande de l'actionnement du dispositif de déplacement, dans lequel le dispositif de commande de dispositif génère des informations de conduite manuelle pour commander l'actionnement du dispositif de déplacement sur la base des informations d'opération de conduite sur l'opération réalisée par le conducteur, et corrige le signal de commande d'actionnement sur la base des informations d'opération de conduite si un comportement du dispositif de déplacement sur la base du signal de commande d'actionnement dévie d'un mouvement sur la base des informations de conduite manuelle d'une quantité supérieure ou égale à une référence prédéterminée.

2. Système de régulation de vitesse de véhicule à moteur selon la revendication 1, dans lequel
le dispositif de commande de dispositif génère un signal de conduite manuelle pour commander l'actionnement du dispositif de déplacement sur la base des informations d'opération de conduite sur l'opération réalisée par le conducteur, et délivre en sortie le signal de conduite manuelle, en lieu et place du signal de commande d'actionnement, au dispositif de déplacement si une condition prédéterminée déterminée à l'avance est remplie.
